# EUROPEAN PATENT SPECIFICATION

(11) **EP 2 416 428 B1**
(45) Date of publication and mention of the grant of the patent: **18.01.2017**
(21) Application number: 10758225.6
(22) Date of filing: 26.03.2010
(51) Int. Cl.: C01B 3/38, C01B 3/48, H01M 8/0612, H01M 8/04955, H01M 8/04014, H01M 8/04664

(54) **FUEL CELL SYSTEM**
BRENNSTOFFZELLENSYSTEM
SYSTÈME DE PILE À COMBUSTIBLE

(30) Priority: 31.03.2009 JP 2009085070
(43) Date of publication of application: 08.02.2012
(73) Proprietor: Panasonic Intellectual Property Management Co., Ltd., Osaka 540-6207 (JP)
(72) Inventor: TAMURA, Yoshio, Osaka-shi Osaka 540-6207 (JP); TAGUCHI, Kiyoshi, Osaka-shi Osaka 540-6207 (JP); KUSUMURA, Koichi, Osaka-shi Osaka 540-6207 (JP); YASUDA, Shigeki, Osaka-shi Osaka 540-6207 (JP)
(74) Representative: Leinweber & Zimmermann
(86) International application number: PCT/JP2010/002162
(87) International publication number: WO 2010/113442

(56) References cited:
- WO-A1-03/010846
- WO-A1-2008/035776
- JP-A- H0 459 602
- JP-A- 2002 362 903
- JP-A- 2003 217 635
- JP-A- 2004 182 489
- JP-A- 2004 196 610
- JP-A- 2004 200 065
- JP-A- 2004 200 065
- JP-A- 2004 210 576
- JP-A- 2004 296 266
- JP-A- 2008 297 155
- US-A- 3 941 553

## Description

### Technical Field

The present invention relates to a fuel cell system. The present invention particularly relates to a fuel cell system configured to generate power by using a hydrogen-rich gas that is generated through a steam reforming reaction by using, as a main raw material (raw fuel), a hydrocarbon material such as a natural gas, LPG, gasoline, naphtha, kerosene, or methanol.

### Background Art

In a hydrogen generator of fuel cell systems, a raw fuel containing an organic compound comprised of carbon atoms and hydrogen atoms is steam-reformed at a reformer that includes a reforming catalyst layer. Through this reforming reaction, a hydrogen-rich gas is generated as a reformed gas (hereinafter, the hydrogen-rich gas may be simply referred to as a "hydrogen gas", or alternatively, referred to as a "fuel gas")

In such a fuel cell system, a fuel cell uses the hydrogen gas to cause a reaction between the hydrogen gas and an oxidizing gas such as air, thereby generating electric power and heat.

The reforming reaction is an endothermic reaction, which progresses under a temperature of approximately 600°C to 700°C. Therefore, it is necessaty to heat the reforming catalyst layer in order to cause the reforming reaction to progress. In general, a combustion burner is used as means for heating the reforming catalyst layer. A raw fuel containing an organic compound, or an off fuel gas unused in the fuel cell, is supplied to the combustion burner as a fuel for the combustion burner, and also, air or the like is supplied to the combustion burner as an oxidizing gas. As a result, combustion of such an air-fuel mixture occurs. In order to cause the combustion of such an air-fuel mixture, an initial ignition of the combustion burner is necessary. One general ignition method is to generate electrical sparks by using an igniter (an ignition device) or the like.

There are cases where the flame of the combustion burner goes out due to fluctuations and/or external disturbances in a supply system (hereinafter, such a situation where the flame goes out is referred to as "accidental flame extinction"). If accidental flame extinction occurs at the combustion burner, heat necessary for the reforming reaction cannot be supplied to the hydrogen generator. This hinders the hydrogen generator from generating the hydrogen gas. As a result, the generation of power and heat by the fuel cell system cannot be continued. In this respect, there is a proposed stop process as follows: if accidental flame extinction occurs at the combustion burner during the power generation of the fuel cell, the exit of the anode gas passage of the fuel cell is sealed off and the fuel supply to the combustion burner is stopped; then, the combustion burner is purged by using an oxidizing gas such as air; and thereafter, the combustion burner is ignited again (see, for example, Patent Literature 1 which is an example of the conventional art).

### Citation List

### Patent Literature

PTL 1: Japanese Laid-Open Patent Application Publication No. 2008-91094

### Summary of Invention

### Advantageous Effects of Invention

According to the present invention, communication of the anode gas passage of the fuel cell with the combustor is maintained. This makes it possible to realize a fuel cell system that includes a hydrogen generator configured to perform a reforming reaction using evaporative water and that reduces, as compared to the conventional art, pressure damage caused to the anode gas passage of the fuel cell due to water evaporation when accidental flame extinction occurs at the combustor.

### Technical Problem

In the conventional fuel cell system as described above, if accidental flame extinction occurs at the combustion burner during the power generation of the fuel cell, the exit of the anode gas passage of the fuel cell is sealed off. In addition, in the conventional fuel cell system, when the exit of the anode gas passage of the fuel cell is sealed off, the power generation operation of the fuel cell is controlled so as to increase the amount of power generated by the fuel cell, for the purpose of suppressing an increase in the internal pressure of the fuel cell.

However, there is a case where an influence of a rapid increase in the amount of gas within the hydrogen generator (i.e., a rapid pressure increase within the hydrogen generator), which is caused by generation of steam from reforming water continuously fed to the hydrogen generator, cannot be properly suppressed by increasing the amount of power generated by the fuel cell. In this case, even if an attempt is made to reduce the internal pressure of the hydrogen generator by increasing the amount of power generated by the fuel cell, there is still a possibility that the increase in the internal pressure of the hydrogen generator is not reduced sufficiently, and as a result, components of the fuel cell are damaged. In particular, there occurs a pressure difference between the anode gas passage, the internal pressure of which increases rapidly, and the cathode gas passage, the internal pressure of which does not increase. The pressure difference may cause a large load to be imposed on electrolyte materials of the fuel cell. This may result in the electrolyte materials being damaged. It should be noted that even if the reforming water is not continuously supplied into the hydrogen generator, it is expected that the same problem occurs due to a rapid increase in the internal pressure that is caused by evaporation of the reforming water that remains within the hydrogen generator.

The present invention has been made in view of the above problems. An object of the present invention is to provide a fuel cell system that includes a hydrogen generator configured to perform a reforming reaction using evaporative water and that reduces, as compared to the conventional art, pressure damage caused to the anode gas passage of the fuel cell due to water evaporation when accidental flame extinction occurs at the combustor.

JP H0459602 A and US2004101721 disclose a fuel cell system according to the preamble of claim 1. US 3941553 A discloses a heater satety control system.

### Solution to Problem

In order to solve the above problems, a fuel cell system according to the invention comprises the features of claim 1. It includes: a hydrogen generator configured to generate a fuel gas through a reforming reaction by using a raw fuel; a fuel cell configured to generate power by using the fuel gas; a combustor configured to heat the hydrogen generator; at least one on-off valve configured to open/block a gas passage through which the gas that is sent out from the hydrogen generator is supplied to the combustor; a combustion air supply device configured to supply combustion air to the combustor; an ignition device provided at the combustor; and a controller. The combustor is configured to perform combustion during power generation of the fuel cell by using the gas supplied through the gas passage. In a case where accidental flame extinction has occurred at the combustor during the power generation of the fuel cell, the controller performs an ignition operation of the ignition device with the on-off valve kept opened.

The fuel cell system according to a second invention may include a raw fuel supply device configured to supply the raw fuel to the hydrogen generator. In the case where accidental flame extinction has occurred at the combustor during the power generation of the fuel cell, the controller may supply the raw fuel to the hydrogen generator by means of the raw fuel supply device and the combustion air to the combustor by means of the combustion air supply device, and may perform the ignition operation of the ignition device, with the on-off valve kept opened.

In the fuel cell system according to a third invention, if the combustor is not successfully ignited through the ignition operation, the controller may perform a stop process of the fuel cell system.

In the fuel cell system according to the present invention, if the combustor is not successfully ignited through the ignition operation, the controller may control an operation amount of the combustion air supply device such that the operation amount becomes greater than when the fuel cell is generating power.

The fuel cell system according to a fourth invention may include: a first gas passage through which the gas that is sent out from the hydrogen generator is guided into the combustor in a manner to bypass the fuel cell; a first on-off valve configured to open/block the first gas passage; a second gas passage through which the gas that is sent out from the hydrogen generator is guided into the combustor through the fuel cell; and a second on-off valve configured to open/block the second gas passage. The controller may perform the ignition operation of the ignition device with at least one of the first on-off valve and the second on-off valve opened.

The fuel cell system according to a fifth invention may include: a heat exchanger configured to perform heat exchange between an exhaust gas discharged from the combustor and a heating medium; a heating medium passage through which the heating medium flows; a pump configured to cause the heating medium to flow through the heating medium passage; and a heat accumulator configured to store heat that has been recovered by the heating medium. The controller may control the pump to operate during the ignition operation of the ignition device.

In the fuel cell system according to the invention, a period over which the ignition operation is performed in the case where accidental flame extinction has occurred at the combustor during the power generation of the fuel cell is shorter than a period over which the ignition operation is performed at the start of the combustion of the combustor in a start-up process.

### Brief Description of Drawings

[Fig. 1] Fig. 1 is a block diagram showing an example of the configuration of a fuel cell system according to Embodiment 1 of the present invention.
[Fig. 2] Fig. 2 is a block diagram showing an example of the configuration of a fuel cell system according to Embodiment 2 of the present invention.
[Fig. 3] Fig. 3 is a block diagram showing a variation of the fuel cell system according to Embodiment 2 of the present invention.
[Fig. 4] Fig. 4 is a block diagram showing a variation of the fuel cell system according to Embodiment 2 of the present invention.
[Fig. 5] Fig. 5 is a block diagram showing a variation of the fuel cell system according to Embodiment 2 of the present invention.

### Description of Embodiments

First, various features of fuel cell systems according to respective embodiments of the present invention are described below.

A fuel cell system according to a first aspect of the present invention includes: a hydrogen generator configured to generate a fuel gas through a reforming reaction by using a raw fuel; a fuel cell configured to generate power by using the fuel gas; a combustor configured to heat the hydrogen generator; at least one on-off valve configured to open/block a gas passage through which the gas that is sent out from the hydrogen generator is supplied to the combustor; a combustion air supply device configured to supply combustion air to the combustor; an ignition device provided at the combustor; and a controller. The combustor is configured to perform combustion during power generation of the fuel cell by using the gas supplied through the gas passage. In a case where accidental flame extinction has occurred at the combustor during the power generation of the fuel cell, the controller performs an ignition operation of the ignition device with the on-off valve kept opened.

With the above configuration, a countermeasure is taken against the accidental flame extinction at the combustor. The countermeasure is to perform the ignition operation of the ignition device in a state where the on-off valve, which is configured to open/block the gas passage through which the gas sent out from the hydrogen generator is supplied to the combustor, is kept opened.

Consequently, in the fuel cell system according to the first aspect, which includes the hydrogen generator configured to perform a reforming reaction using evaporative water, pressure damage that is caused to the anode gas passage of the fuel cell due to water evaporation when accidental flame extinction occurs at the combustor is reduced as compared to the conventional art.

The "raw fuel" herein refers to a material that contains an organic compound of which the constituent elements include at least carbon and hydrogen. The fuel gas is generated from the material through the reforming reaction. Examples of the "raw fuel" include hydrocarbons such as methane, ethane, and propane, and alcohols such as methanol and ethanol.

The "combustor" refers to, for example, a heating device such as a combustion burner configured to combust an air-fuel mixture. As described above, the "accidental flame extinction at the combustor" refers to a phenomenon where the flame of the "combustor" goes out.

The "ignition device" refers to, for example, an electrical ignition device such as an igniter (spark plug). In this case, the "ignition operation of the ignition device" refers to an operation of electrically generating sparks by using the spark plug.

The "on-off valve" may be, for example, a solenoid valve of which the valving element is opened/closed by electromagnetic force.

The "at least one on-off valve configured to open/block a gas passage through which the gas that is sent out from the hydrogen generator is supplied to the combustor" includes a first on-off valve and/or a second on-off valve. The first on-off valve is provided along a first gas passage through which the gas sent out from the hydrogen generator is guided into the combustor in a manner to bypass the fuel cell. The second on-off valve is configured to open/block a second gas passage through which the gas sent out from the hydrogen generator is guided into the combustor through the fuel cell.

The wording "open/block a gas passage" (i.e., open and block a gas passage) refers to opening/blocking the internal gas-passing space of the gas passage. If the "on-off valve" is in an opened state, gas is allowed to flow through the gas passage. If the "on-off valve" is in a closed state, gas is blocked from flowing through the gas passage.

The "controller" is configured as, for example, a microprocessor that includes a CPU and a memory. The "controller" may be either a single controller or a plurality of controllers.

A fuel cell system according to a second aspect of the present invention may be configured such that, the fuel cell system according to the first aspect includes a raw fuel supply device configured to supply the raw fuel to the hydrogen generator. In the case where accidental flame extinction has occurred at the combustor during the power generation of the fuel cell, the controller may supply the raw fuel to the hydrogen generator by means of the raw fuel supply device and the combustion air to the combustor by means of the combustion air supply device, and may perform the ignition operation of the ignition device, with the on-off valve kept opened.

According to the above configuration, if the combustor is re-ignited through the ignition operation of the ignition device, then the power generation of the fuel cell can be continued smoothly since the raw fuel has been supplied to the hydrogen generator by means of the raw fuel supply device.

A fuel cell system according to a third aspect of the present invention may be configured such that, in the fuel cell system according to the first or second aspect, if the combustor is not successfully ignited through the ignition operation of the ignition device, the controller performs a stop process of the fuel cell system.

According to the above configuration, in the case where accidental flame extinction has occurred at the combustor during the power generation of the fuel cell, if an ignition is not properly initiated through the ignition operation of the ignition device, such a failed ignition is addressed properly.

It should be noted that a specific example of the "stop process of the fuel cell system" will be described below.

A fuel cell system according to a fourth aspect of the present invention may be configured such that, in the fuel cell system according to any one of the first to third aspects, if the combustor is not successfully ignited through the ignition operation of the ignition device, the controller controls an operation amount of the combustion air supply device such that the operation amount becomes greater than when the fuel cell is generating power.

According to the above configuration, the amount of air sent to the combustor can be increased. This makes it possible to dilute and discharge a combustible gas within the combustor to the outside of the fuel cell system. Further, in the case where the combustor is not successfully ignited, the air supplied from the combustion air supply device acts as a cooling medium for cooling down the fuel cell system. Accordingly, the fuel cell system can be cooled down smoothly by increasing the amount of air sent to the combustor.

The "combustion air supply device" herein may be, for example, a blower such as a fan.

Among determining factors in an air amount sent to the combustor, which is the control amount of the "combustion air supply device", a determining factor controllable by the "controller" (e.g., the number of rotations of the fan) is referred to as the "operation amount of the combustion air supply device". Accordingly, the air amount sent to the combustor is increased/decreased in accordance with an increase/decrease in the "operation amount of the combustion air supply device".

A fuel cell system according to a fifth aspect of the present invention may be configured such that, the fuel cell system according to any one of the first to fourth aspects includes: a first gas passage through which the gas that is sent out from the hydrogen generator is guided into the combustor in a manner to bypass the fuel cell; a first on-off valve configured to open/block the first gas passage; a second gas passage through which the gas that is sent out from the hydrogen generator is guided into the combustor through the fuel cell; and a second on-off valve configured to open/block the second gas passage. The controller may perform the ignition operation of the ignition device with at least one of the first on-off valve and the second on-off valve opened.

A fuel cell system according to a sixth aspect of the present invention may be configured such that, the fuel cell system according to the first or second aspect includes: a heat exchanger configured to perform heat exchange between an exhaust gas discharged from the combustor and a heating medium; a heating medium passage through which the heating medium flows; a pump configured to cause the heating medium to flow through the heating medium passage; and a heat accumulator configured to store heat that has been recovered by the heating medium.

The controller may control the pump to operate during the ignition operation of the ignition device.

According to the above configuration, even during the ignition operation of the ignition device that is performed when the combustion is not performed by the combustor, the heat exchange between the exhaust gas and the heating medium is performed properly, and as a result, the heat from the exhaust gas is recovered properly.

The "heat exchanger" may be configured as any device, so long as the device is intended to exchange heat between a high-temperature fluid (heating fluid) and a low-temperature fluid (heat receiving fluid).

Considering the thermal efficiency of the fuel cell system, it is preferred to recover the heat from the exhaust gas through the heat exchange. The recovered heat may be used for hot water supply, floor heating, etc. In this case, piping that is connected to the heat accumulator (e.g., the heat accumulator is a hot water tank for hot water supply or a passage that forms a floor heating system) may be used as the "heating medium passage".

Preferably, the "heating medium" is a liquid. For example, water in a liquid form or an antifreezing fluid may be used as the "heating medium".

The "pump" may be configured in any form, so long as the pump is configured to cause the heating medium to flow through the heating medium passage. The "exhaust gas" refers to a gas discharged from the combustor. Examples of the "exhaust gas" include: a flue gas that is generated due to combustion of an air-fuel mixture of a combustion fuel and combustion air; and the combustion air when the combustion at the combustor is stopped.

A fuel cell system according to the present invention is configured such that, in the fuel cell system according to the first or second aspect, a period over which the ignition operation of the ignition device is performed in the case where accidental flame extinction has occurred at the combustor during the power generation of the fuel cell is shorter than a period over which the ignition operation of the ignition device is performed at the start of the combustion of the combustor in a start-up process.

When accidental flame extinction has occurred at the combustor during the power generation of the fuel cell, the amount of combustible gas present within the combustor at the time is greater than when the ignition operation is performed at the start of the combustion in the start-up process. Therefore, in the case where accidental flame extinction has occurred at the combustor during the power generation of the fuel cell, if the period of the ignition operation is prolonged, there is a possibility that the combustible gas is discharged to the outside of the fuel cell system through a flue gas passage. Here, the possibility that the combustible gas is discharged to the outside of the fuel cell system can be reduced by setting, as described above, the period of the ignition operation that is performed when accidental flame extinction has occurred during the power generation to be shorter than the period of the ignition operation that is performed at the beginning of the start-up process. The "period of the ignition operation" herein refers to, in the case of the ignition operation of, for example, an igniter, a period over which the igniter continuously generates sparks to cause an ignition. The "period of the ignition operation" herein does not refer to an overall ignition period including a retry ignition operation that is performed after the pre-purge (purging by air) of the combustor 2.

The "start-up process" includes a step of increasing the temperature of the hydrogen generator to a temperature suitable for the reforming reaction. The "start-up process" refers to a process that is performed until a highly concentrated hydrogen-containing gas starts to be supplied to the fuel cell.

### (Embodiment 1)

Hereinafter, specific configuration examples and operational examples of a fuel cell system according to Embodiment 1 of the present invention will be described with reference to the accompanying drawings.

It should be noted that the specific description given below merely indicates examples of the above-described features of the fuel cell system. For example, in the description of specific examples below, the same terms as those used above to specify respective components of the fuel cell system may be used with corresponding reference signs added thereto. In such a case, in the description below, each device specified by a term with a reference sign added thereto is merely an example of a component that is specified by the same term in the above description of the fuel cell system.

Accordingly, the above-described features of the fuel cell system are not limited by the specific description given below.

### [Example of Configuration of Fuel Cell System]

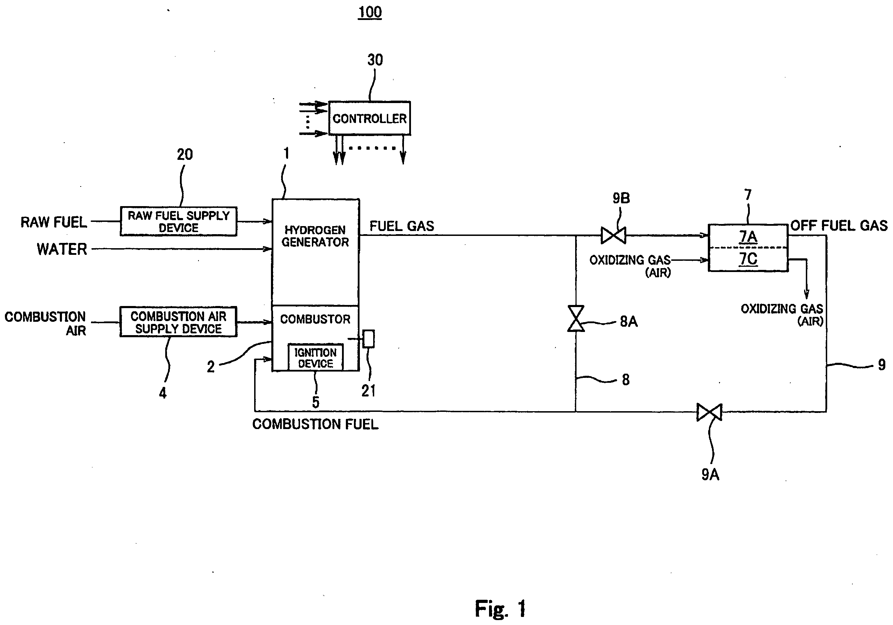

Fig. 1 is a block diagram showing an example of the configuration of the fuel cell system according to Embodiment 1 of the present invention.

As shown in Fig. 1, a fuel cell system 100 includes a hydrogen generator 1 which is configured to generate a fuel gas through a reforming reaction by using a raw fuel. The fuel cell system 100 also includes a raw fuel supply device 20 configured to supply the raw fuel to the hydrogen generator 1. Here, a water stop tap, for example, is used as the source of water that is necessary for the reforming reaction at the hydrogen generator 1. Piping between the water stop tap and the hydrogen generator 1 is provided with, for example, valves for adjusting the flow of water (not shown).

When the raw fuel and water are supplied to the hydrogen generator 1, the hydrogen generator 1 causes a reforming reaction between the raw fuel and water at a reforming catalyst layer (not shown). As a result, a hydrogen-containing gas (i.e., a fuel gas) is generated at the hydrogen generator 1. Although a reformer that includes the reforming catalyst layer is provided within the hydrogen generator 1, such an internal configuration of the hydrogen generator 1 is publicly known (hydrogen generators of particular configurations may include a shift converter or a carbon monoxide remover together with the reformer, for the purpose of reducing carbon monoxide in the hydrogen-containing gas; the shift converter is configured to reduce carbon monoxide through a shift reaction and the carbon monoxide remover is configured to reduce carbon monoxide through an oxidation reaction). Therefore, a detailed description of the internal configuration is omitted, and the internal configuration is not shown in the drawings.

A booster pump, or a flow rate adjusting valve, connected to the main tap of a city gas (a raw fuel gas supplied in cities through piping) may be used as the raw fuel supply device 20, for example. In such a case, the raw fuel supply device 20 supplies the hydrogen generator 1 with the city gas which is an example of the raw fuel and which contains methane gas as a main component.

The reforming reaction (which is an endothermic reaction) at the reforming catalyst layer progresses under a high temperature of approximately 600°C to 700°C. Therefore, a combustor 2, which is configured to heat the hydrogen generator 1 from the outside to increase the temperature of the reforming catalyst layer, is necessary in order to cause the reforming reaction to progress within the hydrogen generator 1.

Accordingly, as shown in Fig. 1, the fuel cell system 100 includes: the combustor 2 configured to heat the hydrogen generator 1; a combustion air supply device 4 configured to supply the combustor 2 with air for use in combustion (hereinafter, simply referred to as "combustion air"); and an ignition device 5 provided at the combustor 2.

A fan configured to send, to the combustor 2, the atmosphere (air) containing oxygen necessary for the combustion may be used as the combustion air supply device 4, for example. The combustion air supply device 4 need not be a fan. Any other device may be used as the combustion air supply device 4, so long as the device is configured to supply air. For example, a pump may be used as the combustion air supply device 4.

It should be noted that the supply of a fuel for use in the combustion (hereinafter, simply referred to as a combustion fuel) to the combustor 2 will be described in detail below.

When the combustion fuel and the combustion air are supplied to the combustor 2, combustion of an air-fuel mixture of the combustion fuel and the combustion air occurs within the combustor 2. Methods for the combustion within the combustor 2 include diffusion combustion and premixed combustion. In the diffusion combustion, the combustion fuel and the combustion air are separately supplied into the combustor 2. Then, when the combustion fuel and the combustion air come into contact with each other within the combustor 2, the air-fuel mixture is combusted. In the premixed combustion, the combustion fuel and the combustion air are mixed in advance and supplied into the combustor 2. Then, the air-fuel mixture is combusted.

Either diffusion combustion or premixed combustion may be used in the present embodiment. However, in the case of using premixed combustion, it is necessary to design the configuration in such a manner as to prevent backfire from occurring at a premixing part. In order to prevent backfire, wire mesh or the like may be provided, for example, within a passage through which the air-fuel mixture is supplied to the combustor 2 so that the flame will not reach the upstream side from the wire mesh.

The ignition device 5 is used as an ignition source for causing the air-fuel mixture of the combustion fuel and the combustion air to be ignited at the combustor 2. As one example, an igniter (a spark plug) that electrically generates sparks may be used as the ignition device 5. Further, as shown in Fig. 1, the combustor 2 is provided with a detector 21 configured to detect whether the air-fuel mixture has been ignited and to detect a combustion state of the combustor 2. As one example, a frame rod may be used as the detector 21.

As shown in Fig. 1, the fuel cell system 100 includes a fuel cell 7 which is configured to generate power by using the fuel gas (hydrogen gas) generated at the hydrogen generator 1.

In the fuel cell 7, the fuel gas that is supplied to an anode 7A of the fuel cell 7 and an oxidizing gas (e.g., air) that is supplied to a cathode 7C of the fuel cell 7 electrochemically react with each other, and thereby electric power and heat are generated. Excess fuel gas that is unused at the anode 7A, that is, off fuel gas, is supplied to the combustor 2 as the combustion fuel. Excess oxidizing gas that is unused at the cathode 7C is discharged to the outside of the fuel cell system 100 (i.e., to the atmosphere). It should be noted that in many cases, a solid polymer fuel cell, a phosphoric-acid fuel cell, or a solid oxide fuel cell is used as the fuel cell 7. In a case where a solid oxide fuel cell is used as the fuel cell 7, the fuel cell 7 may be a solid oxide fuel cell of an external reforming type, the fuel cell body of which is provided separately from the hydrogen generator that includes a reformer as described with reference to Fig. 1, or alternatively, the fuel cell 7 may be a solid oxide fuel cell of an internal reforming type, in which the hydrogen generator and the fuel cell body are integrated.

As shown in Fig. 1, the fuel cell system 100 includes on-off valves configured to open/block (open and block) a gas passage through which the gas that is sent out from the hydrogen generator 1 is supplied to the combustor 2.

Accordingly, space, within the gas passage, through which the gas passes can be opened and closed by using these on-off valves.

The gas passage includes: a first gas passage 8 through which a combustible gas (e.g., the fuel gas) that is sent out from the hydrogen generator 1 is guided into the combustor 2 in a manner to bypass the fuel cell 7; and a second gas passage 9 through which the combustible gas (e.g., the fuel gas) that is sent out from the hydrogen generator 1 is guided into the combustor 2 through the fuel cell 7. The on-off valves include: a first on-off valve 8A which is configured to open/block the first gas passage 8; and a second on-off valve 9A and a third on-off valve 9B which are configured to open/block the second gas passage 9.

Fluid piping that forms a fluid passage may be used as the first and second gas passages 8 and 9, for example. Solenoid valves configured to open/close the internal space of the fluid piping may be used as the first on-off valve 8A, the second on-off valve 9A, and the third on-off valve 9B, for example.

The gas supply system as described above is used to supply the combustion fuel to the combustor 2 in manners, for example, as described below.

A first supply example is a case where the first on-off valve 8A is opened, and in such a state, the fuel gas sent out from the hydrogen generator 1 is used as the combustion fuel for the combustor 2. In this case, the raw fuel from the raw fuel supply device 20 is, when passing through the hydrogen generator 1, reformed into a fuel gas. The fuel gas is supplied to the combustor 2 through the first gas passage 8 in a manner to bypass the fuel cell 7. The supply of the gas in the manner according to the first supply example is performed basically when the start-up process of the fuel cell system 100 is performed.

A second supply example is a case where the second and third on-off valves 9A and 9B are opened, and in such a state, the off fuel gas that is sent out from the fuel cell 7 is used as the combustion fuel for the combustor 2. In this case, the raw fuel from the raw fuel supply device 20 is, when passing through the hydrogen generator 1, reformed into a fuel gas. The fuel gas passes through the anode 7A of the fuel cell 7, and the gas that exits from the anode 7A, i.e., the off fuel gas, is supplied to the combustor 2 through the second gas passage 9. The supply of the gas in the manner according to the second supply example is performed basically when the power generation operation of the fuel cell system 100 is performed.

As shown in Fig. 1, the fuel cell system 100 includes a controller 30.

The controller 30 includes, for example, a CPU and a memory. The controller 30 controls operations of its various control target devices that are included in the fuel cell system 100, based on signals from various detectors of the fuel cell system 100.

In the fuel cell system 100 according to the present embodiment, if for example the controller 30 detects accidental flame extinction at the combustor 2 by means of the detector 21, the controller 30 performs control to maintain a "state where the on-off valves configured to open/block the gas passage through which the gas sent out from the hydrogen generator 1 is supplied to the combustor 5 are kept opened". In such a state, the ignition operation of the ignition device 5 is performed. If the combustor 2 is not successfully ignited through the ignition operation of the ignition device 5, the controller 30 performs a stop process of the fuel cell system 100. In addition, if the combustor 2 is not successfully ignited through the ignition operation of the ignition device 5, the controller 30 controls the operation amount of the combustion air supply device 4 such that the operation amount becomes greater than when the fuel cell 7 is generating power.

It should be noted that these controls performed by the controller 30 will be described below in detail.

### [Example of Normal Operations of Fuel Cell System]

Hereinafter, an example of normal operations of the fuel cell system 100 according to Embodiment 1 of the present invention is described.

It should be noted that operations described below are performed as a result of the controller 30 controlling respective components of the fuel cell system 100.

The normal operations of the fuel cell system 100 are roughly categorized into the following steps: a start-up step, a power generation step, a stop step, and a standby step. Since these steps are publicly known, they are described below briefly.

### (Start-Up Step)

The start-up step of the fuel cell system 100 is performed when the fuel cell system 100 is in a pre-startup state (e.g., a standby state described below). The start-up step is a step of causing the fuel cell system 100 in the pre-startup state to become ready to generate power. In the start-up step, a start-up process, which is a process of increasing the temperature of the hydrogen generator 1 to a suitable temperature, is performed.

In the start-up step, the combustion fuel and the combustion air are supplied to the combustor 2, and the air-fuel mixture of the combustion fuel and the combustion air is combusted at the combustor 2 by means of the ignition device 5. The combustion air is supplied by means of the combustion air supply device 4. Moreover, in the start-up step where the combustion fuel is supplied, similarly to the above-described first supply example, the raw fuel gas sent out from the hydrogen generator 1, which is a combustible gas supplied to the combustor 2 through the first gas passage 8, is ignited and thereby the combustion starts, and thereafter, the combustible gas which is continuously sent out from the hydrogen generator 1 is used as the combustion fuel for the combustor 2.

In this manner, the hydrogen generator 1 is heated up. When the temperature of the reforming catalyst layer of the hydrogen generator 1 is increased to reach a temperature necessary for the reforming reaction, the fuel gas (hydrogen gas) is generated from the raw fuel and water through the reforming reaction. When the temperature of the reforming catalyst layer of the hydrogen generator 1 has been sufficiently increased so that a high-quality hydrogen-containing gas, in which the carbon monoxide concentration is low, can be stably generated, the operation advances to the power generation step of the fuel cell system 100, which is described below.

### (Power Generation Step)

The power generation step of the fuel cell system 100 is a step of obtaining power from the fuel cell 7 by using the fuel gas (hydrogen gas) generated by the hydrogen generator 1.

In the power generation step, the high-quality hydrogen gas is supplied to the anode 7A of the fuel cell 7. Also, an oxidizing gas (in this case, air) is supplied to the cathode 7C of the fuel cell 7 by means of a supply device which is not shown. Accordingly, the hydrogen gas and the air react with each other. As a result, the fuel cell 7 generates power and heat. The generated power can be used by household electrical appliances, for example. The generated heat can be used for household heating and/or hot water supply, for example. Thus, the fuel cell system 100 according to the present embodiment makes it possible to construct a co-generation system where both power and heat are utilized. However, as an alternative, a mono-generation system may be constructed where power is utilized but heat is wasted.

It should be noted that during the power generation step of the fuel cell system 100, it is necessary for the combustion at the combustor 2 to be continued for the purpose of maintaining the temperature of the reforming catalyst layer at a level that allows the high-quality hydrogen-containing gas to be generated. Therefore, the supply of the combustion fuel in the power generation step is performed according to the above-described second supply example where the off fuel gas is used as the combustion fuel for the combustor 2.

### (Stop Step)

The stop step of the fuel cell system 100 is a step of stopping the power generation of the fuel cell system 100.

The stop step described below is performed, for example, in the following case: a case where household demands for power and heat are less than predetermined amounts; a case where household demands for power and heat are assumed to be less than predetermined amounts; or a case where a user has inputted, via an operation device which is not shown, an instruction to stop the power generation of the fuel cell system 100.

In the stop step, the supply of the raw fuel and water to the hydrogen generator 1 is stopped. Also, the supply of the combustion fuel to the combustor 2 is stopped. As a result, the combustion at the combustor 2 is stopped. In this case, however, it is usual to continue for a while the supply of the combustion air from the combustion air supply device 4. In this manner, the combustible gas that remains within the combustor 2 can be purged.

### (Standby Step)

The standby step of the fuel cell system 100 is a step of standing by after the stop process is completed. In the standby step, the operation stands by in preparation for the next start-up until an instruction to perform the next start-up is given.

In the standby step, a standby state where the operation of the fuel cell system 100 is stopped continues.

### [Example of Operations When Accidental Flame Extinction Has Occurred at Combustor during Power Generation of Fuel Cell]

In a case where a combustion burner is used as the combustor 2, there is a possibility that the flame of the combustor 2 goes out, causing accidental flame extinction. Conceivable causes of the accidental flame extinction of the combustor 2 include: a transient disturbance in balance between the supply amount of the combustion fuel and the supply amount of the combustion air; ingress of waterdrops, carried by the off fuel gas discharged from the anode 7A of the fuel cell 7, into the combustor 2; and natural phenomena such as changes in the atmospheric pressure and wind velocity.

In a case where accidental flame extinction occurs at the combustor 2 due to the above-described reasons during the power generation of the fuel cell 7, if such a situation where the flame is extinct continues, heat that is necessary for the reforming reaction cannot be supplied to the hydrogen generator 1. Consequently, the hydrogen gas cannot be generated at the hydrogen generator 1.

In view of the above, in the fuel cell system 100 according to the present embodiment, in a case where accidental flame extinction has occurred at the combustor 2 during the power generation of the fuel cell 7, an ignition operation of the ignition device 5 is performed as described below with the second on-off valve kept opened, instead of the above-described conventional stop process. It should be noted that operations described below are performed as a result of the controller 30 controlling respective components of the fuel cell system 100.

If accidental flame extinction occurs at the combustor 2 during the power generation of the fuel cell 7, the accidental flame extinction is detected based on an output signal from the detector 21. In response, the operation described below starts.

First, the ignition operation of the ignition device 5 is performed immediately after the detection of the accidental flame extinction. The accidental flame extinction of the combustor 2 is often caused by, for example, a transient disturbance in the gas supply system. Therefore, if the supply of the combustion air and the raw fuel is continued in the same manner as before the occurrence of the accidental flame extinction, it is expected that the gaseous air-fuel mixture within the combustor 2 remains in an air-fuel ratio that allows the air-fuel mixture to be combusted at the combustor 2. Accordingly, in the fuel cell system 100 of the present embodiment, if accidental flame extinction occurs at the combustor 2, the second on-off valve 9A and the third on-off valve 9B are kept opened, and the supply of the raw fuel to the hydrogen generator 1 by means of the raw fuel supply device 20, the supply of water to the hydrogen generator 1, and the supply of the combustion air by means of the combustion air supply device 4 are continued.

This allows the fuel cell system 100 of the present embodiment to re-ignite the combustor 2, with reduced pressure damage to the anode gas passage of the fuel cell as compared to the conventional art.

It should be noted that the fuel cell system 100 according to the present embodiment is configured such that if accidental flame extinction occurs at the combustor 2, the second on-off valve 9A and the third on-off valve 9B are kept opened; the supply of the raw fuel to the hydrogen generator 1 by means of the raw fuel supply device 20, the supply of water to the hydrogen generator 1, and the supply of the combustion air by means of the combustion air supply device 4 are continued; and an ignition operation is performed by means of the ignition device 5. However, the present embodiment is not limited thereto.

For example, as an alternative, the fuel cell system 100 may be configured such that if accidental flame extinction occurs at the combustor 2, at least one of the second on-off valve 9A and the third on-off valve 9B is closed; the first on-off valve 8A is opened; the supply of the raw fuel to the hydrogen generator 1 by means of the raw fuel supply device 20, the supply of water to the hydrogen generator 1, and the supply of the combustion air by means of the combustion air supply device 4 are continued; and an ignition operation is performed by means of the ignition device 5. In the case where at least one of the second on-off valve 9A and the third on-off valve 9B is closed and the first on-off valve 8A is opened, a switch between opened and closed states of at least one of the second on-off valve 9A and the third on-off valve 9B and a switch between opened and closed states of the first on-off valve 8A (e.g., the state of the second on-off valve 9A is switched from "opened" to "closed", and the state of the first on-off valve 8A is switched from "closed" to "opened") are performed at the same time, or one of them is performed prior to the other. It should be noted that these switching operations are included in the "state where the on-off valves configured to open/block the gas passage through which the gas sent out from the hydrogen generator 1 is supplied to the combustor 5 are kept opened". However, in the case where at least one of the second on-off valve 9A and the third on-off valve 9B is closed and then the first on-off valve 8A is opened, the at least one of the valves 9A and 9B and the valve 8A are temporarily in a closed state at the same time. A period over which these valves are temporarily in a closed state at the same time is predetermined such that damage is not caused to the components of the fuel cell 7 (e.g., an electrolyte membrane).

As another alternative, the fuel cell system 100 may be configured such that if accidental flame extinction occurs at the combustor 2, the first on-off valve 8A, the second on-off valve 9A, and the third on-off valve 9B are opened together; the supply of the raw fuel to the hydrogen generator 1 by means of the raw fuel supply device 20, the supply of water to the hydrogen generator 1, and the supply of the combustion air by means of the combustion air supply device 4 are continued; and an ignition operation is performed by means of the ignition device 5.

As described above, the feature of the fuel cell system 100 according to the present embodiment is as follows: if accidental flame extinction occurs at the combustor 2, the controller 30 performs an ignition operation by means of the ignition device 5 in a state where at least one of the first on-off valve 8A, and the second and third on-off valves 9A and 9B, are opened.

Further, the period of the ignition operation of the ignition device 5 that is performed when accidental flame extinction has occurred at the combustor 2 during the power generation of the fuel cell 7 is set to be shorter than the period of the ignition operation of the ignition device 5 that is performed in the start-up process of the fuel cell system 100. The reason for this is described below.

The "period of the ignition operation" herein refers to, in the case of the ignition operation of, for example, an igniter, a period over which the igniter continuously generates sparks. The "period of the ignition operation" herein does not refer to an overall ignition period including a retry ignition operation that is performed after the pre-purge (purging by air) of the combustor 2.

In the start-up process of the fuel cell system 100, the concentration of combustible components in the air-fuel mixture of the combustion air and the combustion fuel can be gradually increased from a non-combustible concentration to a combustible concentration while the ignition operation of the ignition device 5 is being performed. Accordingly, even if the period of the ignition operation is set to be relatively long, it does not cause a problem.

In contrast, in a case where accidental flame extinction has occurred at the combustor 2 during the power generation of the fuel cell 7, it can be assumed that the concentration of combustible components in the air-fuel mixture of the combustion air and the combustion fuel within the combustor 2 is a combustible concentration. Accordingly, if the period of the ignition operation in this case is set to be relatively long, the air-fuel mixture is forced to the downstream side of the combustor 2 due to the fuel gas and the combustion air that are supplied to the combustor 2 during the period of the ignition operation. This may result in the air-fuel mixture being discharged to the outside of the fuel cell system 100 through an exhaust outlet which is provided at the downstream end of the flue gas passage.

In view of the above, in order to suppress extended diffusion of the combustible gas (i.e., the air-fuel mixture in which the concentration of combustible components is a combustible concentration), it is preferred in this case that the period of the ignition operation of the ignition device 5 is set to be shorter than the period of the ignition operation of the ignition device 5 that is performed in the start-up process of the fuel cell system 100. In addition, in order to suppress extended diffusion of the combustible gas, it is preferred in this case that the ignition operation of the ignition device 5 is performed only once.

According to the above settings, the diffused combustible gas is expected to stay within the combustor 2. Thus, the discharge of the combustible gas to the outside of the fuel cell system 100 is suppressed.

Moreover, the period of the ignition operation of the ignition device 5 is predetermined to be a short period of time (a few seconds; for example, "six seconds"). Therefore, the power generation of the fuel cell 7 can be continued even during the period of the ignition operation. Accordingly, if the combustor 2 is re-ignited by the ignition operation of the ignition device 5, the combustion of the combustor 2 can be continued without interrupting the power generation step of the fuel cell system 100.

It should be noted that whether the combustor 2 has been ignited is determined based on an output signal from the detector 21.

In the fuel cell system 100 according to the present embodiment, there may be a case where the combustor 2 is not ignited by the ignition operation of the ignition device 5 even if the ignition operation of the ignition device 5 is performed for a period longer than the predetermined "six seconds". In such a case, an accidental flame extinction abnormal stop process of the fuel cell system 100, which will be described below, is performed by the controller 30.

It should be noted that whether an abnormal ignition, in which the combustor 2 is not ignited, has occurred is determined based on an output signal from the detector 21. The predetermined period "six seconds" is merely an example. The period of the ignition operation may be set to any appropriate period depending on, for example, device configurations and a gas flow rate, so long as the set period does not cause the air-fuel mixture containing the combustible gas to be discharged from the exhaust outlet during the period of the ignition operation.

Immediately after the accidental flame extinction abnormal stop of the fuel cell system 100 is performed, the combustible gas still exists within the combustor 2. Therefore, the combustion air processing device 4 is operated, and thereby the combustible gas is diluted with air and discharged to the outside of the fuel cell system 100. In this case, in the fuel cell system 100 according to the present embodiment, the operation amount of the combustion air supply device 4 may be made greater than the operation amount of the combustion air supply device 4 during the power generation of the fuel cell 7.

In this manner, the combustible gas that remains within the combustor 2 is treated appropriately.

In the accidental flame extinction abnormal stop process of the fuel cell system 100, the supply of the raw fuel and water to the hydrogen generator 1 is stopped. However, the raw fuel and reforming water still remain within the hydrogen generator 1. Moreover, immediately after the fuel cell system 100 has stopped, heat that is sufficient for water evaporation and for generating the hydrogen gas through the reforming reaction is still stored in the hydrogen generator 1.

Therefore, similarly to the conventional art, if the second gas passage 9 which connects to the combustor 2 through the anode 7A of the fuel cell 7, and the first gas passage 8 which bypasses the fuel cell 7 (i.e., a bypass passage), are sealed off, then there occurs an increase in the amount of gas (an increase in the number of moles of gas) due to the hydrogen gas generation and water evaporation, resulting in an increase in the internal pressure of the hydrogen generator 1 and/or the fuel cell 7. This may cause structural damage to the hydrogen generator 1 and/or the fuel cell 7.

In view of the above, in the fuel cell system 100 according to the present embodiment, after the supply of the raw fuel and water to the hydrogen generator 1 is stopped, at least one of the first on-off valve 8A, and the second and third on-off valves 9A and 9B, are kept opened.

Accordingly, the combustion air is supplied from the combustion air supply device 4 to the combustor 2 in a state where at least one of the first gas passage 8, and the second gas passages 9, are opened. As a result, an increase in the internal pressure of the hydrogen generator 1 and the fuel cell 7 can be suppressed even while the inside of the combustor 2 is purged with the combustion air (hereinafter, this is referred to as an "excessive pressure increase suppressing operation").

If the excessive pressure increase suppressing operation is performed, there is a possibility that the combustible gas is discharged to the outside of the fuel cell system 100 through the combustor 2 from the exhaust outlet. In the present embodiment, however, the combustion air supply device 4 is operated as described above, and thereby the combustible gas is diluted and the combustible gas concentration is reduced. Consequently, the diluted gas is discharged to the outside of the fuel cell system 100. In this case, the amount of air supplied from the combustion air supply device 4 (specifically, the operation amount of the combustion air supply device 4) may be set in consideration of the amount of combustible components in the combustible gas discharged due to the excessive pressure increase suppressing operation, aiming at preventing the combustible gas in which the concentration of the combustible components is a combustible concentration from being discharged to the outside of the fuel cell system 100.

As described above, the fuel cell system 100 according to the present embodiment includes: the hydrogen generator 1 configured to generate a fuel gas through a reforming reaction by using a raw fuel; the fuel cell 7 configured to generate power by using the fuel gas; the combustor 2 configured to heat the hydrogen generator 1; at least one on-off valve configured to open/block a gas passage through which the gas that is sent out from the hydrogen generator 1 is supplied to the combustor 2; the combustion air supply device 4 configured to supply combustion air to the combustor 2; the ignition device 5 provided at the combustor 2; and the controller 30.

In the fuel cell system 100 according to the present embodiment, an example of the gas passage may be the first gas passage 8, through which the gas sent out from the hydrogen generator 1 is guided into the combustor 2 in a manner to bypass the fuel cell 7. In this case, an example of the at least one on-off valve may be the first on-off valve 8A which is configured to open/block the first gas passage 8. Another example of the gas passage may be the second gas passage 9, through which the gas sent out from the hydrogen generator 1 is guided into the combustor 2 through the fuel cell 7. In this case, another example of the at least one on-off valve may be the second on-off valve 9A and the third on-off valve 9B which are configured to open/block the second gas passage 9. Alternatively, the second gas passage 9, which is one example of the gas passage, may be provided with either one of the second on-off valve 9A or the third on-off valve 9B. In this case, another further example of the at least one on-off valve may be either one of the on-off valves (9A or 9B) provided along the second gas passage 9. In particular, if the first gas passage 8, the first on-off valve 8A, and the second on-off valve 9A are not provided, then the third on-off valve 9B acts as the at least one on-off valve.

The combustor 2 is configured to perform combustion during the power generation of the fuel cell 7 by using, as a combustion fuel, gas that is supplied through the second gas passage 9, for example. The controller 30 is configured such that if accidental flame extinction occurs at the combustor 2 during the power generation of the fuel cell 7, the controller 30 performs the ignition operation of the ignition device 5 in a state where, for example, at least one of the first on-off valve 8A, and the second and third on-off valves 9A and 9B, are opened.

With the above configuration, an ignition operation following accidental flame extinction of the combustor 2 is performed, in which the ignition operation of the ignition device 5 is performed in a state where at least one of the first on-off valve 8A, and the second and third on-off valves 9A and 9B, are opened.

Thus, in the fuel cell system 100 according to the present embodiment which includes the hydrogen generator 1 configured to perform a reforming reaction using evaporative water, pressure damage that is caused to the anode gas passage of the fuel cell 7 due to water evaporation when accidental flame extinction occurs at the combustor 2 is reduced as compared to the conventional art.

### (Embodiment 2)

Hereinafter, specific configuration examples and operational examples of a fuel cell system according to Embodiment 2 of the present invention will be described with reference to the accompanying drawings.

It should be noted that the specific description given below merely indicates examples of the fuel cell system's features that are recited above at the beginning of Description of Embodiments. For example, in the description of specific examples below, the same terms as those used above to specify respective components of the fuel cell system may be used with corresponding reference signs added thereto. In such a case, in the description below, each device specified by a term with a reference sign added thereto is merely an example of a component that is specified by the same term in the above description of the fuel cell system.

Accordingly, the above-described features of the fuel cell system are not limited by the specific description given below.

### [Example of Configuration of Fuel Cell System]

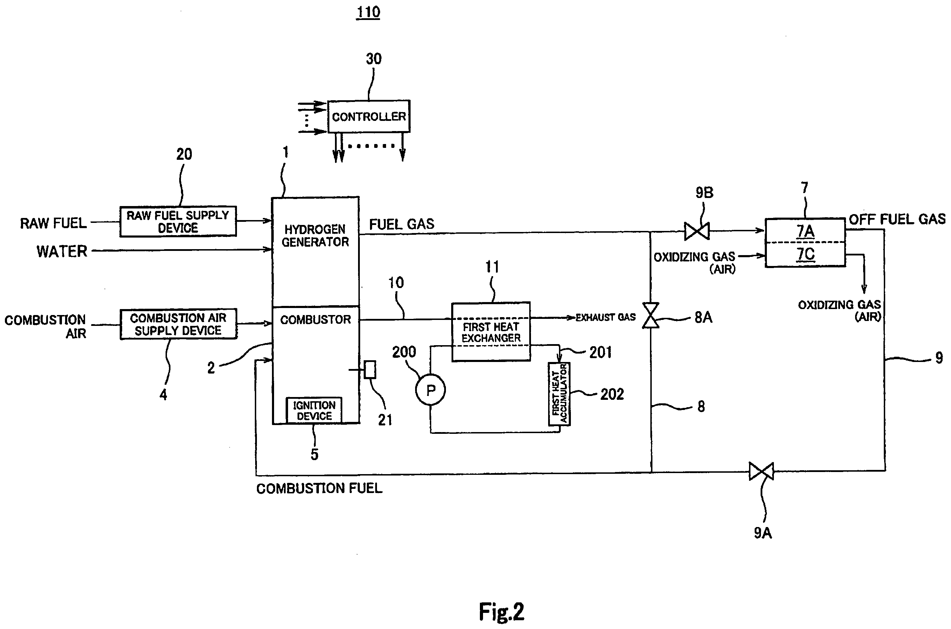

Fig. 2 is a block diagram showing an example of the configuration of the fuel cell system according to Embodiment 2 of the present invention.

In Fig. 2, the same components as those of the fuel cell system 100 according to Embodiment 1 are denoted by the same reference signs as those used in Embodiment 1, and the detailed description of such components is omitted.

As shown in Fig. 2, a fuel cell system 110 according to the present embodiment is different from the fuel cell system 100 according to Embodiment 1 in that the fuel cell system 110 additionally includes an exhaust heat recovery mechanism, which is configured to perform heat exchange between an exhaust gas discharged from the combustor 2 and a first heating medium (e.g., water in a liquid form or an antifreezing fluid) flowing through a first heating medium passage 201.

To be specific, the fuel cell system 110 according to the present embodiment includes: an exhaust gas passage 10 through which the exhaust gas discharged from the combustor 2 flows; the first heating medium passage 201 through which the first heating medium flows; and a first heat exchanger 11 configured to perform heat exchange between the exhaust gas which is a high-temperature gas and the first heating medium which is a low-temperature medium. The first heating medium passage 201 is provided with a first pump 200. The first pump 200 causes the first heating medium to flow through the first heating medium passage 201. The first heating medium passage 201 is provided with a first heat accumulator 202. The first heat accumulator 202 stores therein the first heating medium which flows through the first heating medium passage 201. It should be noted that the operation of the first pump 200 is controlled by the controller 30.

The exhaust gas acts as a heating fluid at the first heat exchanger 11. The exhaust gas, which is discharged from the combustor 2, is guided into the exhaust gas passage 10, and the exhaust gas is cooled down by means of the first heat exchanger 11. The first heating medium acts as a heat receiving fluid at the first heat exchanger 11. The first heating medium is heated through the heat exchange at the first heat exchanger 11, and the first heating medium of which the temperature has been increased due to passing through the first heat exchanger 11 enters the first heat accumulator 202 and is then stored therein.

According to the above configuration, the high-temperature exhaust gas discharged to the outside of the fuel cell system 110 is cooled down through the heat exchange, which is advantageous. In addition, the heat of the exhaust gas recovered through the heat exchange can be utilized, which is also advantageous.

### [Example of Operations of Fuel Cell System]

In the fuel cell system 110 according to the present embodiment, the heat from the exhaust gas is recovered by the first heating medium via the first heat exchanger 11 as a result of the first pump 200 being operated in at least one of the following periods: a period over which the ignition operation of the ignition device 5 is performed after accidental flame extinction has occurred at the combustor 2 during the power generation of the fuel cell 7; and a period over which the pressure increase suppressing operation is performed in the accidental flame extinction abnormal stop process.

The operation period of the combustion air supply device 4 includes the start-up step, the power generation step, and the stop step of the fuel cell system 110. A heat recovery operation, which is performed in each of these steps and in which the heat from the exhaust gas is recovered by the first heating medium via the first heat exchanger 11, is described below.

In the start-up step and the power generation step of the fuel cell system 110, the air-fuel mixture is combusted by the combustor 2. At the time, the first pump 200 is operated, and the first heating medium that flows through the first heating medium passage 201 recovers, via the first heat exchanger 11, heat from an exhaust gas (here, a flue gas produced due to the combustion of the air-fuel mixture) of which the temperature is high due to the combustion. In this manner, the high-temperature exhaust gas that is discharged to the outside of the fuel cell system 110 is cooled down through the heat recovery via the first heat exchanger 11.

In the stop step of the fuel cell system 110, the combustion of the air-fuel mixture at the combustor 2 is not performed in the following periods: a period over which the ignition operation of the ignition device 5 is performed after accidental flame extinction has occurred at the combustor 2 during the power generation of the fuel cell 7; and a period over which the pressure increase suppressing operation is performed in the accidental flame extinction abnormal stop process. In these periods, however, the combustor 2 and the hydrogen generator 1 in a high-temperature state act as heat sources for the exhaust gas. In particular, immediately after the accidental flame extinction abnormal stop process of the fuel cell system 110 has started, the operation amount of the combustion air supply device 4 is increased and thereby the flow rate of the combustion air is increased. Accordingly, a large amount of heat is taken out of the combustor 2 and the hydrogen generator 1 by the exhaust gas (here, mainly the combustion air). For this reason, there is a tendency for the temperature of the exhaust gas to increase. Therefore, the heat from the exhaust gas is recovered by the first heating medium via the first heat exchanger 11 as a result of the first pump 200 being operated in at least one of the following periods: a period over which the ignition operation of the ignition device 5 is performed after accidental flame extinction has occurred at the combustor 2; and a period over which the pressure increase suppressing operation is performed in the accidental flame extinction abnormal stop process. In this manner, even when the combustion of the air-fuel mixture is not performed by the combustor 2, it is preferred to perform, during a period over which the combustion air supply device 4 operates, the heat recovery operation in which the heat from the exhaust gas is recovered by the first heating medium via the first heat exchanger 11.

As described above, the fuel cell system 110 according to the present embodiment includes: the first heat exchanger 11 configured to perform heat exchange between the exhaust gas discharged from the combustor 2 and the first heating medium; the first heating medium passage 201 through which the first heating medium flows; the first pump 200 for causing the first heating medium to flow through the first heating medium passage 201; and the first heat accumulator 202 configured to store therein the heat recovered by the first heating medium. The controller 30 performs the heat recovery operation, in which the heat from the exhaust gas is recovered by the first heating medium via the first heat exchanger 11, by operating the first pump 200 in at least one of the following periods: a period over which the ignition operation of the ignition device 5 is performed; and a period over which the combustion air is supplied from the combustion air supply device 4 in the accidental flame extinction abnormal stop process in a state where the combustion is not performed by combustor 2.

According to the above configuration, the exhaust gas is cooled down appropriately through the above-described heat exchange in at least one of the following periods: a period over which the ignition operation of the ignition device 5 is performed in a state where the combustion is not performed by the combustor 2; and a period over which the combustion air is supplied from the combustion air supply device 4 in the accidental flame extinction abnormal stop process in a state where the combustion is not performed by the combustor 2. In addition, the heat from the exhaust gas is recovered through the heat exchange.

### (Variations of Embodiments 1 and 2)

In the fuel cell system 100 according to Embodiment 1 and the fuel cell system 110 according to Embodiment 2, the controller 30 is configured such that, if accidental flame extinction occurs at the combustor 2 during the power generation of the fuel cell 7, the controller 30 supplies the raw fuel to the hydrogen generator 1 by means of the raw fuel supply device 20, supplies water to the hydrogen generator 1, supplies the combustion air to the combustor 2 by means of the combustion air supply device 4, and performs the ignition operation of the ignition device 5.

The above configuration provides the following advantage: if the combustor 2 is re-ignited through the ignition operation of the ignition device 5, then the power generation of the fuel cell 7 can be continued smoothly since the raw fuel has been supplied to the hydrogen generator 1 by means of the raw fuel supply device 20.

In a fuel cell system according to a variation described below, the controller 30 is configured to stop at least one of the following supplies if accidental flame extinction occurs at the combustor 2: the supply of the raw fuel to the hydrogen generator 1 by means of the raw fuel supply device 20; and the supply of water to the hydrogen generator 1 by means of a water supply device (not shown). In a case where the raw fuel supply device 20 is configured as, for example, a booster pump, the controller 30 may stop the booster pump from operating in order to stop supplying the raw fuel to the hydrogen generator 1. In a case where the water supply device is configured as, for example, a pump, the controller 30 may stop the pump from operating in order to stop supplying water to the hydrogen generator 1.

Even if at least one of the supply of the raw fuel to the hydrogen generator 1 by means of the raw fuel supply device 20 and the supply of water to the hydrogen generator 1 by means of the water supply device (not shown) is stopped, steam is still generated from water that remains within the hydrogen generator 1 due to residual heat from the hydrogen generator 1. This causes volume expansion of the gas within the hydrogen generator 1. The volume expansion causes the combustible gas to be forced out of the hydrogen generator 1, and as a result, the combustible gas is continuously supplied to the combustor 2. Accordingly, it is expected that the combustor 2 can be ignited through the ignition operation of the ignition device 5.

Also in this case, in the fuel cell systems 100 and 110 both of which include the hydrogen generator 1 configured to perform a reforming reaction using evaporative water, it is expected that pressure damage that is caused to the anode gas passage of the fuel cell 7 due to water evaporation when accidental flame extinction occurs at the combustor 2 is reduced as compared to the conventional art.

### (Other Variations of Embodiment 2)

Hereinafter, a description is given of variations of the exhaust heat recovery mechanism used in the fuel cell system 110 according to Embodiment 2.

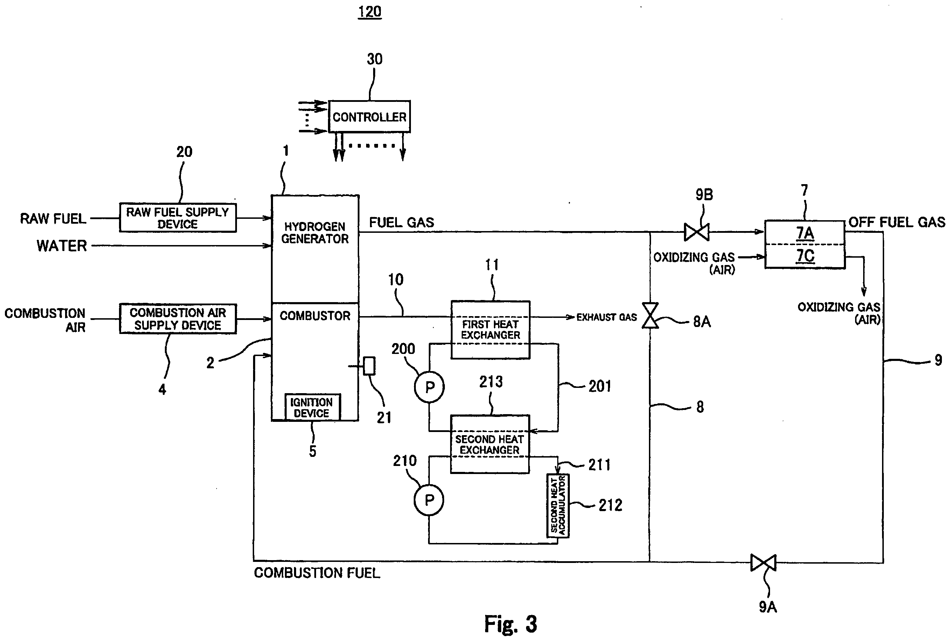

Each of Fig. 3, Fig. 4, and Fig. 5 is a block diagram showing a variation of the exhaust heat recovery mechanism used in the fuel cell system according to Embodiment 2.

It should be noted that components common among these diagrams are denoted by reference signs that are common among the diagrams. In the description below, there are cases where the detailed description of the configuration of such common components is omitted.

Fig. 3 shows an exhaust heat recovery mechanism which is configured to recover, via a secondary cooling system, the heat from the exhaust gas discharged from the combustor 2, and to store the recovered heat in a second heat accumulator 212 of the secondary cooling system.

There is provided a second heat exchanger 213 configured to recover heat from the first heating medium flowing through the first heating medium passage 201, and the heat recovered from the first heating medium is transmitted to a second heating medium (e.g., water in a liquid form or an antifreezing fluid) flowing through a second heating medium passage 211. That is, the first heating medium acts as a heating fluid at the second heat exchanger 213, and the second heating medium acts as a heat receiving fluid at the second heat exchanger 213. When a second pump 210 operates, the second heating medium flows through the second heating medium passage 211. As a result, the second heating medium of which the temperature has been increased due to passing through the second heat exchanger 213 enters the second heat accumulator 212, and is then stored therein.

In a fuel cell system 120 shown in Fig. 3, the controller 3 controls not only the first pump 200 but also the second pump 210 to operate in at least one of the following periods: a period over which the ignition operation of the ignition device 5 is performed in a state where the combustion is not performed by the combustor 2; and a period over which the combustion air is supplied from the combustion air supply device 4 in the accidental flame extinction abnormal stop process in a state where the combustion is not performed by the combustor 2. Accordingly, the heat from the exhaust gas is eventually recovered by the second heating medium, and as a result, the heat from the exhaust gas is stored in the second heat accumulator 212.

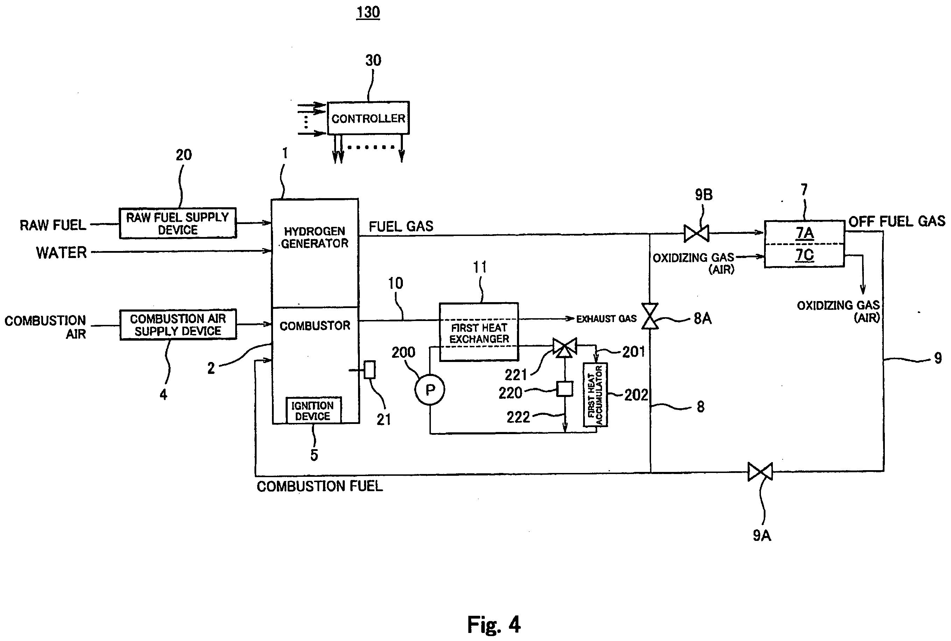

Fig. 4 shows an exhaust heat recovery mechanism which is configured to perform a switching operation with a first switch 221 (e.g., a solenoid three-way valve), such that the first heating medium flows into a first bypass passage 222 when the first heating medium recovers the heat from the exhaust gas.

The first bypass passage 222 connects a passage, of the first heating medium passage 201, that is upstream from the first heat accumulator 202 with a passage, of the first heating medium passage 201, that is downstream from the first heat accumulator 202 in a manner to bypass the first heat accumulator 202. The first switch 221 is configured to switch the destination of the first heating medium that has passed through the first heat exchanger 11, between the first heat accumulator 202 and the first bypass passage 222. The first bypass passage 222 is provided with a radiator 220 which is configured to radiate the heat from the first heating medium that passes through the first bypass passage 222.

In a fuel cell system 130 shown in Fig. 4, the controller 30 controls the first pump 200 to operate and controls the first switch 221 to switch the destination of the first heating medium to the first bypass passage 222, in at least one of the following periods: a period over which the ignition operation of the ignition device 5 is performed in a state where the combustion is not performed by the combustor 2; and a period over which the combustion air is supplied from the combustion air supply device 4 in the accidental flame extinction abnormal stop process in a state where the combustion is not performed by the combustor 2. Accordingly, the heat recovered from the first heating medium is radiated via the radiator 220.

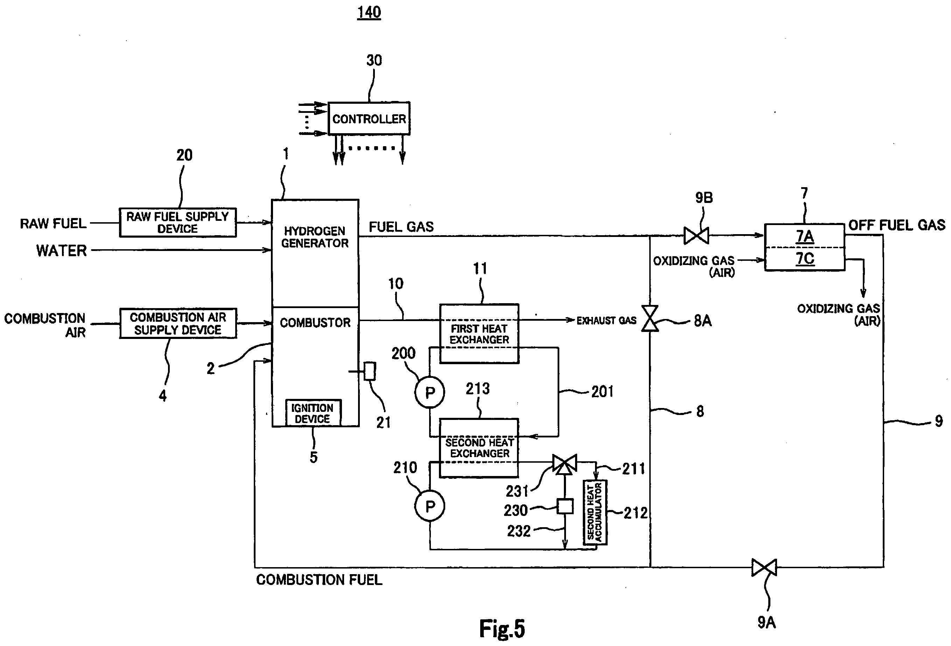

Fig. 5 shows an exhaust heat recovery mechanism which is configured to recover, via the secondary cooling system, the heat from the exhaust gas discharged from the combustor 2, and to store the recovered heat in the second heat accumulator 212 of the secondary cooling system. The secondary cooling system includes a second bypass passage 232 which connects a passage, of the second heating medium passage 211, that is upstream from the second heat accumulator 212 with a passage, of the second heating medium passage 211, that is downstream from the second heat accumulator 212 in a manner to bypass the second heat accumulator 212. There is provided a second switch 231 configured to switch the destination of the second heating medium that has passed through the second heat exchanger 213, between the second heat accumulator 212 and the second bypass passage 232. The second bypass passage 232 is provided with a radiator 230 which is configured to radiate the heat from the second heating medium that passes through the second bypass passage 232.

In a fuel cell system 140 shown in Fig. 5, the controller 30 controls the first pump 200 and the second pump 210 to operate and controls the second switch 231 to switch the destination of the second heating medium to the second bypass passage 232, in at least one of the following periods: a period over which the ignition operation of the ignition device 5 is performed in a state where the combustion is not performed by the combustor 2; and a period over which the combustion air is supplied from the combustion air supply device 4 in the accidental flame extinction abnormal stop process in a state where the combustion is not performed by the combustor 2. Accordingly, the heat recovered from the second heating medium is radiated via the radiator 230.

### Industrial Applicability

The present invention provides a fuel cell system that includes a hydrogen generator configured to perform a reforming reaction using evaporative water and that reduces, as compared to the conventional art, pressure damage caused to the anode gas passage of the fuel cell due to water evaporation when accidental flame extinction occurs at the combustor.

Thus, the fuel cell system according to the present invention is useful as a power generator in various applications. The fuel cell system according to the present invention is applicable to a household or industrial fuel cell co-generation system, for example.

### Reference Signs List

- 1: hydrogen generator
- 2: combustor
- 4: combustion air supply device
- 5: ignition device
- 7: fuel cell
- 7A: anode
- 7C: cathode
- 8: first gas passage
- 8A: first on-off valve
- 9: second gas passage
- 9A: second on-off valve
- 9B: third on-off valve
- 10: exhaust gas passage
- 11: first heat exchanger
- 20: raw fuel supply device
- 21: detector
- 30: controller
- 100, 110, 120, 130, 140: fuel cell system
- 201: first heating medium passage
- 202: first heat accumulator
- 212: second heat accumulator
- 200: first pump
- 210: second pump
- 211: second heating medium passage
- 213: second heat exchanger
- 220, 230: radiator
- 222: first bypass passage
- 232: second bypass passage

## Claims

1. A fuel cell system (100) comprising:
a hydrogen generator (1) configured to generate a fuel gas through a reforming reaction by using a raw fuel;
a fuel cell (7) configured to generate power by using the fuel gas;
a combustor (2) configured to heat the hydrogen generator;
a combustion air supply device (4) configured to supply combustion air to the combustor;
an ignition device (5) provided at the combustor; and
a controller (30), wherein
the combustor is configured to perform combustion during power generation of the fuel cell by using the gas supplied through the gas passage,
the fuel cell system further comprises at least one on-off valve (8A; 9A) configured to open/block a gas passage (8; 9) through which the gas that is sent out from the hydrogen generator is supplied to the combustor; and
in a case where accidental flame extinction has occurred at the combustor during the power generation of the fuel cell, the controller performs an ignition operation of the ignition device with the on-off valve kept opened,
**characterized in that** a period over which the ignition operation is performed in the case where accidental flame extinction has occurred at the combustor during the power generation of the fuel cell is shorter than a period over which the ignition operation is performed at the start of the combustion of the combustor in a start-up process.

2. The fuel cell system according to claim 1, comprising:
a raw fuel supply device (20) configured to supply the raw fuel to the hydrogen generator, wherein
in the case where accidental flame extinction has occurred at the combustor (2) during the power generation of the fuel cell, the controller supplies the raw fuel to the hydrogen generator by means of the raw fuel supply device (20) and the combustion air to the combustor by means of the combustion air supply device (4) and performs the ignition operation of the ignition device (5), with the on-off valve kept opened.

3. The fuel cell system according to claim 1, wherein if the combustor (2) is not successfully ignited through the ignition operation, the controller (30) performs a stop process of the fuel cell system.

4. The fuel cell system according to claim 1, wherein if the combustor (2) is not successfully ignited through the ignition operation, the controller (30) controls an operation amount of the combustion air supply device (4) such that the operation amount becomes greater than when the fuel cell is generating power.

5. The fuel cell system according to any one of claims 1 to 4, comprising:
a first gas passage (8) through which the gas that is sent out from the hydrogen generator is guided into the combustor in a manner to bypass the fuel cell;
a first on-off valve (8A) configured to open/block the first gas passage;
a second gas passage (9) through which the gas that is sent out from the hydrogen generator is guided into the combustor through the fuel cell; and
a second on-off valve (9A) configured to open/block the second gas passage, wherein
the controller (30) performs the ignition operation of the ignition device with at least one of the first on-off valve and the second on-off valve opened.

6. The fuel cell system according to claim 1 or claim 2, comprising:
a heat exchanger (11) configured to perform heat exchange between an exhaust gas discharged from the combustor and a heating medium;
a heating medium passage (201) through which the heating medium flows;
a pump (200) configured to cause the heating medium to flow through the heating medium passage; and
a heat accumulator (202) configured to store heat that has been recovered by the heating medium, wherein
the controller (30) controls the pump to operate during the ignition operation of the ignition device.

## Patentansprüche

1. Brennstoffzellensystem (100), das umfasst:
einen Wasserstoffgenerator (1), der dazu konfiguriert ist, durch eine Reformierreaktion mit Hilfe eines Rohbrennstoffs ein Brennstoffgas zu erzeugen;
eine Brennstoffzelle (7), die dazu konfiguriert ist, Strom mit Hilfe des Brennstoffgases zu erzeugen;
eine Brennkammer (2), die dazu konfiguriert ist, den Wasserstoffgenerator zu erwärmen;
eine Vorrichtung (4) zur Zufuhr von Verbrennungsluft, die dazu konfiguriert ist, der Brennkammer Verbrennungsluft zuzuführen;
eine Zündeinrichtung (5), die an der Brennkammer angeordnet ist; und
eine Steuerung (30), wobei
die Brennkammer dazu konfiguriert ist, während der Stromerzeugung der Brennstoffzelle mit Hilfe des Gases, das durch den Gasdurchgang zugeführt wird, eine Verbrennung durchzuführen,
das Brennstoffzellensystem weiterhin wenigstens ein Ein-/Aus-Ventil (8A; 9A), das dazu konfiguriert ist, einen Gasdurchgang (8; 9), durch den das von dem Wasserstoffgenerator ausgesendete Gas in die Brennkammer zugeführt wird, zu öffnen bzw. zu blockieren, umfasst; und
in dem Fall, dass ein versehentliches Erlöschen der Flamme während der Stromerzeugung in der Brennkammer aufgetreten ist, die Steuerung einen Zündvorgang der Zündeinrichtung durchführt, wobei das Ein-/Aus-Ventil geöffnet bleibt,
**dadurch gekennzeichnet, dass** ein Zeitraum, während dem der Zündvorgang durchgeführt wird in dem Fall, dass ein versehentliches Erlöschen der Flamme während der Stromerzeugung in der Brennkammer aufgetreten ist, kürzer ist als ein Zeitraum, während dem der Zündvorgang durchgeführt wird beim Beginn der Verbrennung in der Brennkammer beim Hochfahren.

2. Brennstoffzellensystem gemäß Anspruch 1, das umfasst:
eine Vorrichtung (20) zur Zufuhr von Rohbrennstoff, die dazu konfiguriert ist, den Rohbrennstoff in den Wasserstoffgenerator zuzuführen, wobei
in dem Fall, dass ein versehentliches Erlöschen der Flamme während der Stromerzeugung der Brennstoffzelle in der Brennkammer (2) aufgetreten ist, die Steuerung den Rohbrennstoff mit Hilfe der Vorrichtung (20) zur Zufuhr von Rohbrennstoff in den Wasserstoffgenerator zuführt und die Verbrennungsluft mit Hilfe der Vorrichtung (4) zur Zufuhr von Verbrennungsluft in die Brennkammer zuführt, und den Zündvorgang der Zündeinrichtung (5) durchführt, wobei das Ein-/Aus-Ventil geöffnet bleibt.

3. Brennstoffzellensystem gemäß Anspruch 1, wobei, wenn die Brennkammer (2) bei dem Zündvorgang nicht erfolgreich gezündet werden kann, die Steuerung (30) einen Anhaltevorgang des Brennstoffzellensystems durchführt.

4. Brennstoffzellensystem gemäß Anspruch 1, wobei, wenn die Brennkammer (2) bei dem Zündvorgang nicht erfolgreich gezündet werden kann, die Steuerung (30) eine Betriebsmenge der Vorrichtung (4) zur Zufuhr von Verbrennungsluft derart steuert, dass die Betriebsmenge größer wird als wenn die Brennstoffzelle Strom erzeugt.

5. Brennstoffzellensystem gemäß einem der Ansprüche 1 bis 4, das umfasst:
einen ersten Gasdurchgang (8), durch den das von dem Wasserstoffgenerator ausgesendete Gas derart in die Brennkammer geführt wird, dass die Brennstoffzelle umgangen wird;
ein erstes Ein-/Aus-Ventil (8A), das dazu konfiguriert ist, den ersten Gasdurchgang zu öffnen bzw. zu blockieren;
einen zweiten Gasdurchgang (9), durch den das von dem Wasserstoffgenerator ausgesendete Gas durch die Brennstoffzelle in die Brennkammer geführt wird; und
ein zweites Ein-/Aus-Ventil (9A), das dazu konfiguriert ist, den zweiten Gasdurchgang zu öffnen bzw. zu blockieren, wobei
die Steuerung (30) den Zündvorgang der Zündeinrichtung durchführt, wobei das erste Ein-/Aus-Ventil und/oder das zweite Ein-/Aus-Ventil geöffnet ist.

6. Brennstoffzellensystem gemäß Anspruch 1 oder Anspruch 2, das umfasst:
einen Wärmeaustauscher (11), der dazu konfiguriert ist, zwischen einem Abgas, das von der Brennkammer abgegeben wird, und einem Wärmemedium einen Wärmeaustausch durchzuführen;
einen Wärmemediumsdurchgang (201), durch den das Wärmemedium strömt;
eine Pumpe (200), die dazu konfiguriert ist, das Wärmemedium zum Strömen durch den Wärmemediumsdurchgang zu veranlassen; und
einen Wärmespeicher (202), der dazu konfiguriert ist, Wärme, die von dem Wärmemedium rückgewonnen wurde, zu speichern, wobei
die Steuerung (30) die Pumpe dazu steuert, während des Zündvorgangs der Zündeinrichtung in Betrieb zu sein.

## Revendications

1. Système de pile à combustible (100) comprenant :
un générateur d'hydrogène (1) configuré pour produire un gaz combustible sous l'effet d'une réaction de reformage au moyen d'un combustible brut,
une pile à combustible (7) configurée pour produire de l'électricité au moyen du gaz combustible,
une chambre de combustion (2) configurée pour chauffer le générateur d'hydrogène,
un dispositif d'apport d'air de combustion (4) configuré pour apporter de l'air de combustion à la chambre de combustion,
un dispositif d'allumage (5) prévu au niveau de la chambre de combustion, et
un dispositif de commande (30) ; dans laquelle
la chambre de combustion est configurée pour réaliser une combustion pendant la production d'électricité de la pile à combustible au moyen du gaz introduit par la conduite de gaz,
le système de pile à combustible comprend en outre au moins une vanne d'arrêt (8A ; 9A) configurée pour ouvrir et fermer une conduite de gaz (8 ; 9) par laquelle le gaz émis par le générateur d'hydrogène est apporté à la chambre de combustion, et
si la flamme s'est accidentellement éteinte dans la chambre de combustion pendant la production d'électricité de la pile à combustible, le dispositif de commande procède à une opération d'allumage du dispositif d'allumage tandis que la vanne d'arrêt reste ouverte,
**caractérisée en ce qu'**une période pendant laquelle l'opération d'allumage est réalisée si la flamme s'est accidentellement éteinte dans la chambre de combustion pendant la production d'électricité de la pile à combustible est plus courte qu'une période pendant laquelle est réalisée l'opération d'allumage au commencement de la combustion dans la chambre de combustion lors d'un processus de démarrage.

2. Système de pile à combustible selon la revendication 1, comprenant :
un dispositif d'apport de combustible brut (20) configuré pour apporter le combustible brut au générateur d'hydrogène ; dans laquelle
si la flamme s'est accidentellement éteinte dans la chambre de combustion (2) pendant la production d'électricité de la pile à combustible, le dispositif de commande apporte le combustible brut au générateur d'hydrogène par l'intermédiaire du dispositif d'apport de combustible brut (20) et l'air de combustion à la chambre de combustion par l'intermédiaire du dispositif d'apport d'air de combustion (4) et procède à l'opération d'allumage du dispositif d'allumage (5), tandis que la vanne d'arrêt reste ouverte.

3. Système de pile à combustible selon la revendication 1, dans laquelle, si la chambre de combustion (2) ne parvient à subir d'allumage au cours de l'opération d'allumage, le dispositif de commande (30) procède à un processus d'arrêt du système de pile à combustible.

4. Système de pile à combustible selon la revendication 1, dans laquelle, si la chambre de combustion (2) ne parvient à subir d'allumage au cours de l'opération d'allumage, le dispositif de commande (30) commande la quantité de fonctionnement du dispositif d'apport d'air de combustion (4) de manière que cette quantité de fonctionnement soit supérieure à celle mise en oeuvre lorsque la pile à combustible produit de l'électricité.

5. Système de pile à combustible selon l'une quelconque des revendications 1 à 4, comprenant :
un premier passage de gaz (8) par lequel le gaz émis par le générateur d'hydrogène est conduit jusque dans la chambre de combustion en contournant la pile à combustible,
une première vanne d'arrêt (8A) configurée pour ouvrir et fermer le premier passage de gaz,
un deuxième passage de gaz (9) par lequel le gaz émis par le générateur d'hydrogène est conduit jusque dans la chambre de combustion en traversant la pile à combustible, et
une seconde vanne d'arrêt (9A) configurée pour ouvrir et fermer le deuxième passage de gaz ; dans laquelle
le dispositif de commande (30) procède à l'opération d'allumage du dispositif d'allumage tandis que la première vanne d'arrêt et/ou la seconde vanne d'arrêt sont ouvertes.

6. Système de pile à combustible selon la revendication 1 ou la revendication 2, comprenant :
un échangeur de chaleur (11) configuré pour réaliser un échange thermique entre un gaz d'échappement issu de la chambre de combustion et un fluide calorifère,
une conduite de fluide calorifère (201) dans laquelle s'écoule le fluide calorifère,
une pompe (200) configurée pour amener le fluide calorifère à s'écouler dans la conduite de fluide calorifère, et
un accumulateur de chaleur (202) configuré pour emmagasiner la chaleur qui a été récupérée par le fluide calorifère ; dans laquelle
le dispositif de commande (30) commande la pompe de manière qu'elle fonctionne pendant l'opération d'allumage du dispositif d'allumage.
